# EUROPEAN PATENT SPECIFICATION

(11) **EP 3 395 044 B1**
(45) Date of publication and mention of the grant of the patent: **25.08.2021**
(21) Application number: 15816808.8
(22) Date of filing: 23.12.2015
(51) Int. Cl.: H04L 29/08, H04W 4/029, H04W 4/02

(54) **LOCAL SERVICE NODE IMPROVING THE USER EXPERIENCE**
LOKALER SERVICE-KNOTEN ZUR VERBESSERUNG DER BENUTZERFREUNDLICHKEIT
NOEUD DE SERVICE LOCAL AMÉLIORANT L'EXPÉRIENCE D'UTILISATEUR

(43) Date of publication of application: 31.10.2018
(73) Proprietor: Telefonaktiebolaget LM Ericsson (publ), 164 83 Stockholm (SE)
(72) Inventor: LINDOFF, Bengt, 237 35 Bjärred (SE); ÅSTRÖM, Magnus, 222 28 Lund (SE); PERSSON, Per, 247 34 Södra Sandby (SE)
(74) Representative: Ericsson
(86) International application number: PCT/EP2015/081153
(87) International publication number: WO 2017/108128

(56) References cited:
- EP-A1- 1 598 985
- EP-A2- 1 429 518
- WO-A1-2014/140526
- US-A1- 2011 060 808
- None

## Description

### TECHNICAL FIELD

Embodiments herein relates to a method and arrangement in a central node, when a mobile communication device is in the presence of an unreliable communication link and distributed applications are being run. Examples of such distributed applications include cases where parts of the application and associated data reside in the cloud.

In particular it relates to migration of one or more data modules and/or one or more application modules from a remote service node to a local service node residing in a vehicle, where the central node determines that a first condition is met that indicates a request to migrate one or more data modules and/or one or more application modules from a remote service node to a local service node and initiates a first migration of one or more data modules and/or one or more application modules based on whether the first condition is met.

### BACKGROUND

Mobile communication networks MC-NW are normally multi-purpose networks providing communication capabilities for a variety of communication devices, these networks are typically managed by a telecom operator.

Some of the communication devices, the mobile communication devices MCD, connect wirelessly to the networks wireless access nodes, mainly for the reason that they will move around geographically, but also for other reasons. The mobile communication devices connect either directly to the wireless access nodes or via different relay techniques like e.g. through mesh, or ad-hoc, networks.

Some other communication devices connect via landline, or a short range radio link like for example Wi-Fi, to internet which connects to the mobile communication networks via gateways. Today many communication devices, such as for example smartphones, and tablets or computers with a built in mobile telephone modem can connect to the mobile communication networks both via the access points and via internet.

The mobile communication devices are also known as wireless devices (WD), wireless terminals (WT), mobile terminals (MT), mobile stations (MS), user equipment (UE), user device (UD) etc. These words can typically be regarded as synonyms, but some of them may in some contexts denote a communication device in relation to a specific telecom standard, but the latter aspect is not of importance in this disclosure.

Here it should be mentioned that another aspect of the term wireless device is that it usually is not limited to denote devices that are enabled to communicate in mobile communication networks having a cellular structure, but it also can denote devices that are enabled to communicate wirelessly using short range radio technologies like Bluetooth and Wi-Fi, which does not necessarily have to be connected to internet or a mobile communications system. Examples of such a device could be a Bluetooth enabled wireless headset.

In this disclosure all the terms above are considered as synonyms, except the term wireless device which includes also the cases mentioned above.

The mobile communication devices in the present context may be, for example, portable, pocket-storable, hand-held, computer-comprised, vehicle-mounted mobile devices or even devices that are installed in a fixed location. Examples of mobile communication devices could be mobile telephones, cellular telephones, smartphones, laptops, tablet computers, surf plates, electronic books etc.

The mobile communication devices may also be different kinds of sensors, metering devices, actuators, small appliance or other electronic equipment, or even cargo equipped with communication equipment, none of these examples are necessarily being associated with an individual human user.

The mobile communication devices are enabled to communicate wirelessly in a mobile communication network. The communication may be performed e.g. between two mobile communication devices, between a mobile communication device and a regular fixed telephone and/or between a mobile communication device and a computer or server. The mobile communication devices also communicates with the mobile communication network itself, among other things in order to exchange system and control information.

A mobile communication network MC-NW is sometimes also referred to as a cellular communication network, a cellular radio system, a cellular network, a mobile telephony network or even a wireless communication network or a wireless communication system.

These terms can typically be regarded as synonyms but can sometimes be the terms wireless communication network and wireless communication system can be seen as a wider term including communication systems that allows for wireless communication but does not necessarily have a traditional cellular structure, examples of such systems could be devices communicating with Bluetooth or Wi-Fi.

In this disclosure all the terms above are considered as synonyms, except the terms wireless communication network and wireless communication system which includes also the cases mentioned above.

A cellular communications network, covers a geographical area which is divided into cell areas, wherein each cell area is being served by a wireless access node AN. Put simply it can be said that a cell is the geographical area where radio coverage is provided by the wireless access node. A cellular communications network normally comprises a Radio Access Network RAN and possibly one or more core networks. The Radio Access Network comprising the wireless access nodes.

The wireless access nodes could be either base stations, using communication protocols that are specifically standardised for a certain cellular communications network, or other types of wireless access nodes allowing the mobile communication devices to connect via alternative wireless technologies like Wi-Fi.

The base stations could be any of Radio Base Station RBS, eNB, eNodeB, NodeB, B node, or BTS (Base Transceiver Station), depending on the technology and terminology used. The base stations may be of different classes such as e.g. macro eNodeB, home eNodeB or pico base station, based on transmission power and thereby also cell size.

Further, each wireless access node may support one or several communication technologies. The wireless access nodes communicate over the air interface operating on radio frequencies with the wireless devices within range of the wireless access node. In the context of this disclosure, the expression Downlink (DL) is used for the transmission path from the wireless access node to the wireless device. The expression Uplink (UL) is used for the transmission path in the opposite direction i.e. from the wireless device to the wireless access node.

In 3rd Generation Partnership Project (3GPP), Long Term Evolution (LTE), wireless access nodes, which may be referred to as eNodeBs or even eNBs, may be directly connected to one or more core networks.

3GPP LTE radio access standard has been written in order to support high bitrates and low latency both for uplink and downlink traffic. All data transmission is in LTE is controlled by the radio base station.

By nature all communication links are unreliable to some extent. Examples could be that a wireline communication link can be physically cut of, and a wireless communication link can suddenly experience a higher amount of interference or the mobile communication device could run out of coverage or lose contact completely for some time, all of these scenarios typically resulting in a degraded communication capabilities.

Wireline links are not expected to be unreliable unless in unusual conditions. Wireless links on the other hand are expected to provide communication capabilities that will vary in different conditions.

WO 2014/140526 relates to a method for predicting future cellular link performance to a device in a vehicle and adapt some NW or service related actions based on the prediction.

### SUMMARY

An object of the present disclose is to mitigate, alleviate, or eliminate one or more of the deficiencies that can arise when a mobile communication device is in the presence of an unreliable communication link and distributed applications are being run.

The present disclosure relates to a method and arrangement in a central node for migration of data and/or application modules from a remote service node to a local service node residing in a vehicle, where the central node determines that a first condition is met that indicates a request to migrate one or more data modules and/or one or more application modules from a remote service node to a local service node and initiates a first migration of data and/or application modules based on whether the first condition is met.

According to some aspects of this disclosure the central node proactively make use of a-priori known circumstances, e.g. a user operating a mobile communication equipment will be traveling in a vehicle, e.g. by train, by bus or by airplane, with varying degrees of connectivity. If such a condition is detected the central node will timely and pro-actively initiate a migration of one or more data modules, and/or one or more application modules from one or more remote service nodes (e.g. servers) to a local service node being on board the vehicle. The local service node is enabled to provide computing and storage capacity, and to participate in the migration of the one or more data modules and/or one or more application modules.

An advantage with embodiments herein is that the migration will be initiated before the anticipated degradation of communication capabilities occurs, thus avoiding an initial interruption of communication.

Another advantage with embodiments herein is that the mobile communication equipment when on board a vehicle will have reliable access to the local service node without running the risk of losing connectivity.

Another advantage with the embodiments herein is that the user experience for other mobile communication devices sharing the same unreliable link will also be improved, since it will remove the significant overhead traffic a poorly connected mobile communication device often implies.

Another advantage with embodiments herein is that they also opens up for added value services for different companies, e.g. the operator of the vehicle (e.g. a bus, train, or airplane), where such solutions together with agreed third party applications can give competitive edge for these companies. The invention is disclosed in the appended claims.

### BRIEF DESCRIPTION OF THE DRAWINGS

Examples of embodiments herein are described in more detail with reference to attached figures in which:
- Figure 1: provides a system overview illustrating a mobile communication network.
- Figure 2: illustrates a mobile communication device on board a vehicle communicating with a remote service node.
- Figure 3: illustrates the different nodes and devices involved in different embodiments of this disclosure.
- Figure 4: illustrates data modules and application modules distributed in two nodes.
- Figure 5: illustrates one data module and one application modules after being moved from one of the nodes to a third node, resulting in the data modules and application modules being distributed in three nodes.
- Figure 6: is a flowchart depicting embodiments of a method in a central node C-N.
- Figures 7-11: shows alternative embodiments of step 1 in figure 6.
- Figures 12-14: shows alternative embodiments of step 2 in figure 6.
- Figure 15: is a schematic block diagram illustrating embodiments of a mobile communication device.

### DETAILED DESCRIPTION

As part of developing embodiments herein, some problems will first be identified and discussed.

When running a distributed application, including such simple cases as a client-server setup, in the presence of unreliable communication links, the user is frequently impaired by the application parts running locally on the mobile communication device stalling because of a bad or non-existing communication link in the communication path to some remote part of the application.

The effect is not only a poor user experience for the application running on the mobile communication device, but, since the unreliable link is shared by many other mobile communication devices it is likely that all mobile communication devices will suffer due to the significant overhead traffic a poor client-server connection often implies. The prior art approach to handle such cases is to work in off-line mode, meaning making a copy of all potentially required data to the mobile communication device and working without network access until a later point in time when full access is restored and data can be copied back to the remote servers.

The main issue with a mobile device working in off-line mode is how to synchronize changes to sections of data made locally, with changes made by other users to sections of remote data during the off-line period. A problem here is that the changes often need to be merged manually since neither the local data, nor the remote data can be reliably determined as the ground truth. For small discrepancies this is relatively easy, but in most cases this is a painful and time consuming process.

Another issue is that one has to consider the capabilities of the mobile communication device for data storage and data processing. A problem here is that if the processing capabilities needed for the application is large, it may slow down the mobile communication device, or it may even be impossible to execute the application successfully due to limited memory and processing capability. This applies both to applications that require synchronization but also to applications that only or mainly require downloading of data, examples could be when accessing multimedia contents, like for example videos or webpages.

A wireless link between a mobile communication device and a mobile communication network can be regarded as being unreliable in two slightly different ways.

Firstly, it can be unreliable in an normally expected but more unpredictable way. A mobile communication device connected to a mobile communication network will experience varying degrees of communication capabilities depending on a variety of factors such as traffic load, interference, cell planning, poor coverage, etc. Here it is usually not really feasible to predict when, how bad and for how long the degradation of the communication capabilities will take place.

Secondly, in some situations one can make use of a-priori known circumstances in order to predict a degradation of communication capabilities. Here one can differentiate between to different sub-cases. The first sub-case would be that one can predict that e.g. the coverage will be worse when moving into a specific geographical area, assuming the mobile device or some other entity keep track of areas with bad coverage.

The second sub-case would be that one make use of a-priori known information that the mobile communication device will enter a vehicle which will cause a degradation of communication capabilities. Examples could be that a user or cargo, associated with the mobile communication device, has been scheduled for a trip with a train, ferry, airplane or other vehicle, where it is known that the communication capabilities may vary or be non-existing for a more or less extended period of time.

Embodiments herein provides a above mentioned problems for the latter sub-case discussed above by making use of a-priori known circumstances. The embodiments will require a local service node LS-N residing on board the vehicle and a central node C-N residing somewhere in the cloud.

Cloud computing, also known as on-demand computing, usually refer to a kind of Internet-based computing, where shared resources, data and information are provided to computers and other devices on-demand. It is a model for enabling, on-demand access to a shared pool of configurable computing resources.

The term cloud in this disclosure denotes a remote location from the perspective of the mobile communication device MCD, the local service node LS-N, and the vehicle VEHICLE. This could be a location that is either a remote on-demand shared resource, or a more traditional internet remote node like a server or some other remote computer which is running a dedicated service, depending on the context.

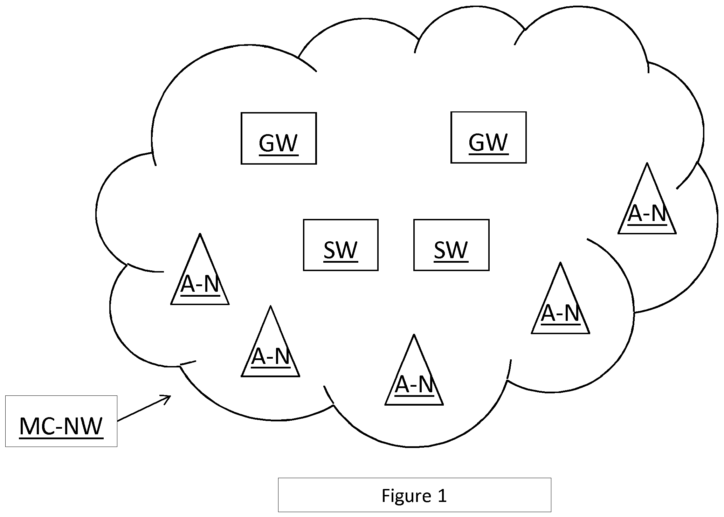

**Figure 1** provides a system overview of a mobile communication network MC-NW showing the most important nodes for this disclosure. The mobile communication network comprises one or more wireless access nodes A-N which communicate with the mobile communication devices MCD, one or more switches SW which switch traffic between wireless access nodes A-N and between wireless access nodes A-N and gateways GW, and one or more gateways GW that allows for communication with other networks, be it other mobile communication networks MC-NW or other types of networks like internet.

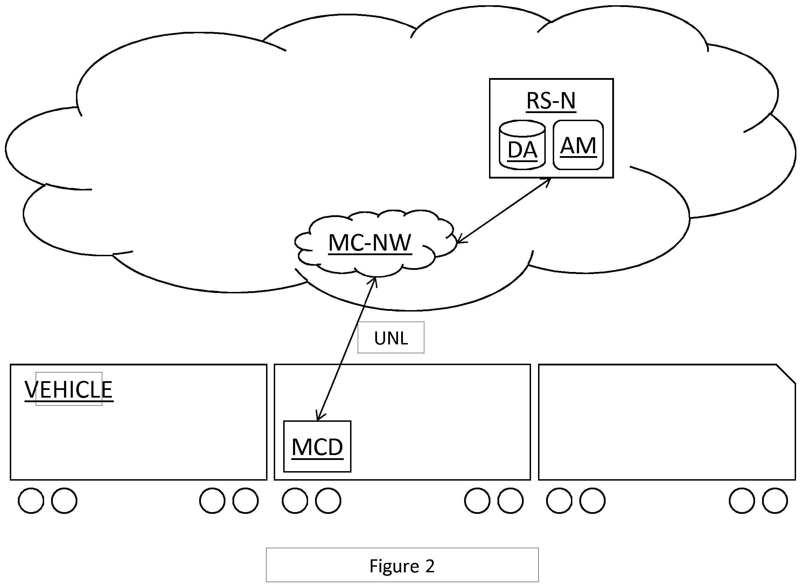

**Figure 2** illustrates the situation in the prior art, where no central node or local service node is present. Here a mobile communication device MCD in a vehicle VEHICLE is communicating with a remote service node RS-N residing in the cloud through a mobile communication network MC-NW via an unreliable link UNL. The remote service node comprises one or more application modules AM and/or one or more data modules DA. The mobile communication device communicates with the application modules AM and will typically either directly or indirectly through the application module AM, access the data module DA. While the mobile communication device MCD is onboard the vehicle VEHICLE, the connection quality via the unreliable link UNL towards services in the cloud will vary and may cause local applications residing in the mobile communication device MCD to become sluggish or even unresponsive.

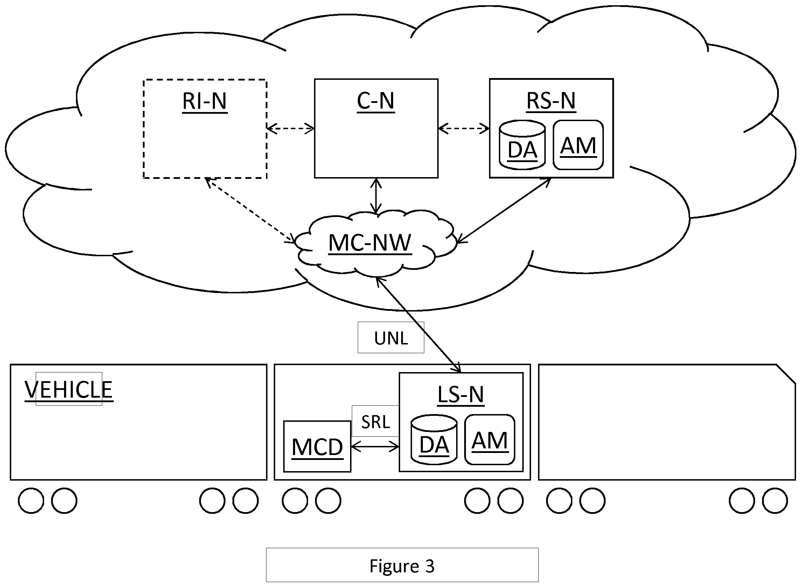

**Figure 3** illustrates the different nodes and devices involved in different embodiments of this disclosure.

The mobile communication device MCD, the vehicle VEHICLE and the remote service node RS-N are already introduced in Figure 2.

The central node C-N is the node where the methods of the various embodiments of this disclose will run. The central node C-N determines if a first migration should be done, and initiates the first migration. The first migration is the migration of one or more data modules DA and/or one or more application modules AM from the remote service node RS-N to a local service node LS-N residing in the vehicle VEHICLE. The first migration will ideally be done just before the mobile communication device MCD enters the vehicle VEHICLE, or just before the departure of the vehicle VEHICLE in order to among other things provide good local connectivity while the vehicle VEHICLE is travelling.

The central node can optionally also determine if a second migration should be done, and initiate the second migration. The second migration is the migration of one or more data modules DA and/or one or more application modules AM from the local service node LS-N residing in the vehicle VEHICLE back to the remote service node RS-N, or possibly to another local service node. The second migration will ideally be done just after the arrival of the vehicle VEHICLE or just after the mobile communication device MCD leaves, or is about to leave, the vehicle VEHICLE. Here the mobile communication device will soon loose its connection via the short range link SRL to the local service node LS-N. It is also assumed that sufficient connectivity will be provided by the unreliable link UNL in order to allow the mobile communication device MCD to communicate with the remote service node RS-N.

The local service node LS-N is a node that will provide services to the mobile communication device MCD while the mobile communication device MCD is travelling on the vehicle.

The remote information node RI-N is an optional node that could contain information related to a planned trip, for example ticket or departure information.

The mobile communication network MC-NW provides communication capabilities between various pieces of equipment. It would typically provide communication capabilities for the mobile communications device MCD, the local service node LS-N, the remote service node RS-N, the central node C-N and optionally to the optional remote information node RI-N.

The mobile communication device MCD and the local service node LS-N will connect via the unreliable link UNL to one or more wireless access nodes A-N of the mobile communication network MC-NW.

The remote service node RS-N, the central node C-N and the remote information node RI-N could either connect via the unreliable link UNL or via other means of connection, like e.g. a wireline link to internet that then would be connected to the mobile communication network MC-NW via one or more gateways.

The central node C-N could connect to the remote service node RS-N and the remote information node RI-N without going through the mobile communication network MV-NW for example via internet.

The short range link SRL could be a short range radio link (e.g. Bluetooth or Wi-Fi) but it could also be a wireline link (e.g. an Ethernet cable), or any other short range link.

Since a vehicle VEHICLE like a bus, a train or an airplane can be equipped with a local service node LS-N providing high quality reliable connectivity to local resources via a short range link SRL, it is possible to create a productive working environment by migrating required one or more data modules DA and/or one or more application modules AM from a remote service node RS-N residing in the cloud to the local service node LS-N residing in the vehicle VEHICLE. The application on the mobile communication device MCD may then continue to work as usual since now communicating with the local service node LS-N.

An example could be that the application modules AM that provides the interface towards the data modules DA and some or all of the data modules would be migrated to the local service node LS-N.

Another example could be the caching of certain websites on airlines. By knowing, á-priori, the different users' preferences such as favorite web sites, it would be possible for the airline to cache these before departure. In the air, only a fraction of the total web browsing communication through the slow air-to-ground link would be needed for either updating the cached websites or downloading additional sites not already cached. As a result, all users would get a significantly better user experience.

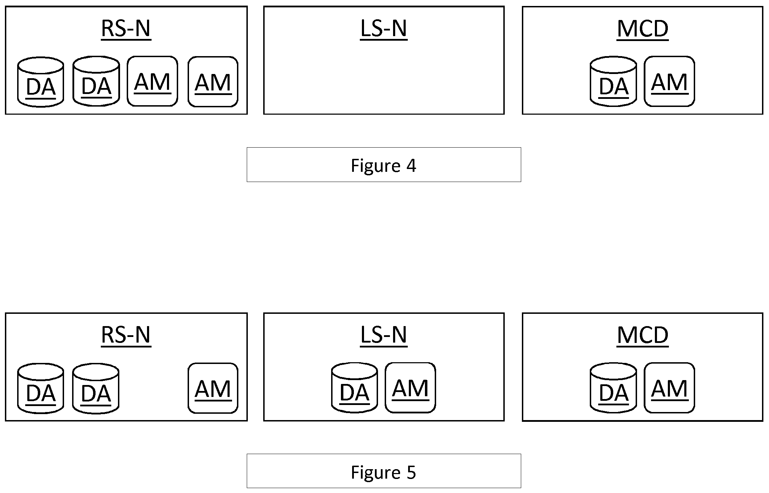

**Figure 4** and **5** illustrates some aspects of distributed applications. In preferred embodiment, a distributed application consists of parts, application modules AM, that can freely migrate across nodes. In the context of this disclosure one could imagine a distributed application where one or more application modules AM could run in, and freely move between, the mobile communications device MCD, the local service node LS-N and the remote service node RS-N, but one could also imagine a distributed application one or more application modules AM could run in, and freely move between, only the local service node LS-N and the remote service node RS-N, where the distributed application would communicate with a separate application running on the mobile communication device MCD. The term local application when used below refers to the application, or application modules AM running on the mobile communication device MCD, be it a part of a distributed application or a separate application.

The same as discussed for the application modules AM applies to data modules DA. In some embodiments, depending on the kind of data required by the local application, it may be necessary to keep a master copy of one or more data modules DA on the remote service node RS-N in the cloud (e.g. if the data is shared with others). In some other embodiments one or more data modules DA could be completely moved to the local service node LS-N (e.g. if the data consists of a specific users private files). In the case of shared data, the system will synchronize changes between the data modules DA residing in the local service node LS-N and data modules DA residing in the remote service node RS-N, when the connection allows in a manner transparent to the user.

In some other embodiment, a traditional client/server setup could be used, here the required services, one or more data modules DA and/or one or more application modules AM, are replicated onto the local service node LS-N, typically using virtual machine instances and some kind of containers such as Docker.

Below some embodiments are described for the scenario with a distributed application where one or more application modules AM could run on, and freely move between, the mobile communications device MCD, the local service node LS-N and the remote service node RS-N. A person skilled in the art will realize that the description works equally well also for the scenario where a distributed application where one or more application modules AM could run on, and freely move between, only the local service node LS-N and the remote service node RS-N, where the distributed application would communicate with a separate application running on the mobile communication device MCD. One only has to consider the data module DA and application module AM running in the mobile communication device MCD as a separate application, with its separate data.

**Figure 4** illustrates data modules DA and application modules AM distributed in two nodes, the remote service node RS-N and the mobile communication device MCD. In figure 4 two data modules DA and two application modules AM runs in the remote service node. This would be the scenario before the mobile communication device enters the vehicle VEHICLE.

In a true distributed application, the application consists of isolated functional units connected by data flow paths. This allows the functional units to migrate freely without affecting the other units or the operation of the application.

**Figure 5** illustrates how it could look like when one data module DA and one application module AM has migrated from the remote service node RS-N the local service node LS-N, resulting in the data modules and application modules being distributed in three nodes. This would be the scenario after the migration, when the mobile communication device MCD is on board the vehicle VEHICLE and the vehicle is on its way.

In this particular case the data module DA retains a master copy in the remote server node RS-N residing in the cloud, while the application module AM is fully migrated to the local service node LS-N residing in the vehicle VEHICLE.

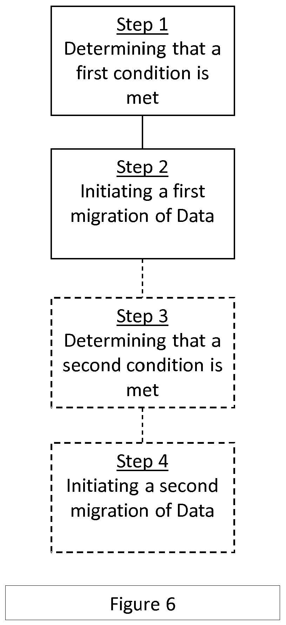

**Figure 6-14** are flowcharts for embodiments of a method in a central node C-N.

**Figure 6** is the main flow chart for the method implemented in the central node C-N.

Here the central node C-N performs two mandatory steps; Step 1 - determining that a first condition is met, Step 2 - initiating a first migration of data.

The central node could also perform two optional steps; Step 3 - determining that a second condition is met, Step 4 - initiating a second migration of data.

In order to provide continuous reliable connectivity for the mobile communication device MCD, the one or more data modules and/or one or more application modules required by the application running on the mobile communication device MCD should be migrated from the remote service node RS-N to the local service node LS-N while the unreliable link UNL used by the mobile communication device MCD still provides reliable communication capabilities of good quality.

In a preferred embodiment this is achieved by obtaining information that a trip is planned, either since before or just being planned, and migrating data and/or resources just prior to departure. This can be achieved by accessing stored departure or ticket information, or by a user, or cargo, being checked in.

In another embodiment, a fallback solution, can be to migrate the one or more data modules DA and/or one or more application modules AM when, the mobile communication device MCD connects to the local service node LS-N after boarding. This connection may be done via a short range link, such as for instance, a local cellular system node, a local Wi-Fi node, a Bluetooth node or even using RF-ID communication or even by a wireline connection.

According to an example scenario the central node C-N handling the initiation of migration of one or more data modules DA and/or one or more application modules AM from a remote service node RS-N to a local service node LS-N residing in a vehicle VEHICLE. The central node C-N will be determining, Step 1, that a first condition is met that indicates a request to migrate the one or more data modules DA and/or the one or more application modules AM from a remote service node RS-N to a local service node LS-N. The central node will then be initiating, Step 2, a first migration of the one or more data modules DA and/or the one or more application modules AM based on whether the first condition is met.

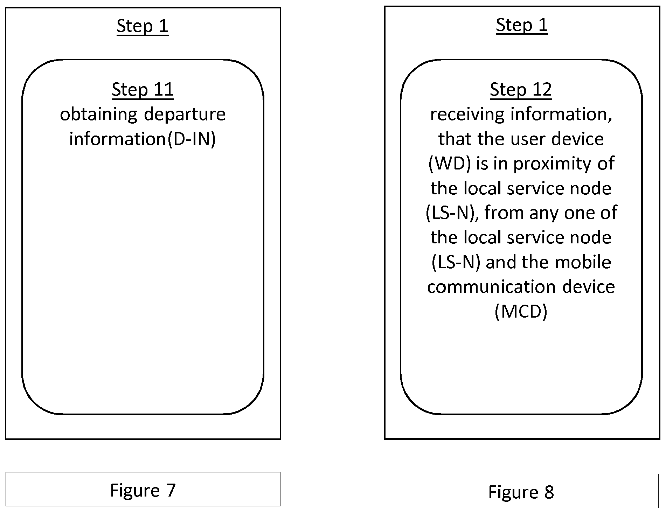

**Figures 7-11** shows alternative embodiments to Step 1 in Figure 6.

The determination could be based on a variety of methods. It could be based on departure information, ticket information or actual departure time for the vehicle. It could also be based on geographical co-ordinates for the vehicle VEHICLE, mobile communication device MCD or the local service node LS-N: It could also be based on information that the mobile communication device MCD is about to board the vehicle VEHICLE and/or the mobile communication device is connected to, or about to connect to, the local service device LS-D via the short range link SRL. The fact that the user is about to board a vehicle can be determined by different additional ways, examples could be that the user of the device is checking in or that the device connects via RF-ID.

The information that the determination will be based on could reside in the central node C-N. It could also be obtained from a remote information node RI-N, or it could be received from the mobile communication device MCD or the local service node LS-N. It could also in some embodiments be received from the remote service device RS-D.

The person skilled in the art would realize that the determination also could be based on any combination of the methods discussed in the description related to figures 7-11.

**Figure** 7 shows an alternative embodiments to Step 1 in Figure 6.

Step 11 - The central node C-N can be determining that the first condition is met based on the central node obtaining departure information D-IN.

**Figure 8** shows an alternative embodiments to Step 1 in Figure 6.

Step 12 - The central node C-N can be determining that at the first condition is met based on receiving information, that the mobile communication device MCD is in proximity of the local service node LS-N, from any one of the local service node LS-N and the mobile communication device MCD.

Another related possibility, not explicitly mentioned in figure 8, could be that the central node C-N can be determining that a first condition is met based on receiving information, that the mobile communication device MCD is in the proximity of a certain geographical position. The central node C-N could receive this information from the mobile communication device MCD.

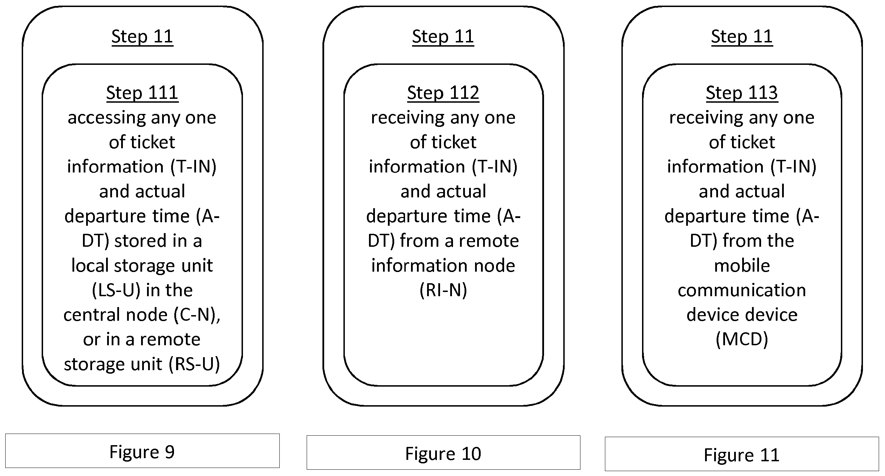

**Figure 9** shows an alternative embodiments to Step 11 in Figure 7.

Step 111 - The central node C-N can be obtaining the departure information D-IN by accessing any one of ticket information T-IN and actual departure time A-DT stored in a local storage unit LS-U in the central node CN or in a remote storage unit RS-U.

**Figure 10** shows an alternative embodiments to Step 11 in Figure 7.

Step 112 - The central node C-N can be obtaining the departure information D-IN by receiving any one of ticket information T-IN and actual departure time A-DT from a remote information node RI-N.

**Figure 11** shows an alternative embodiments to Step 11 in Figure 7.

Step 112 - The central node C-N can be obtaining the departure information D-IN by receiving any one of ticket information T-IN and actual departure time A-DT from a mobile communication device MCD.

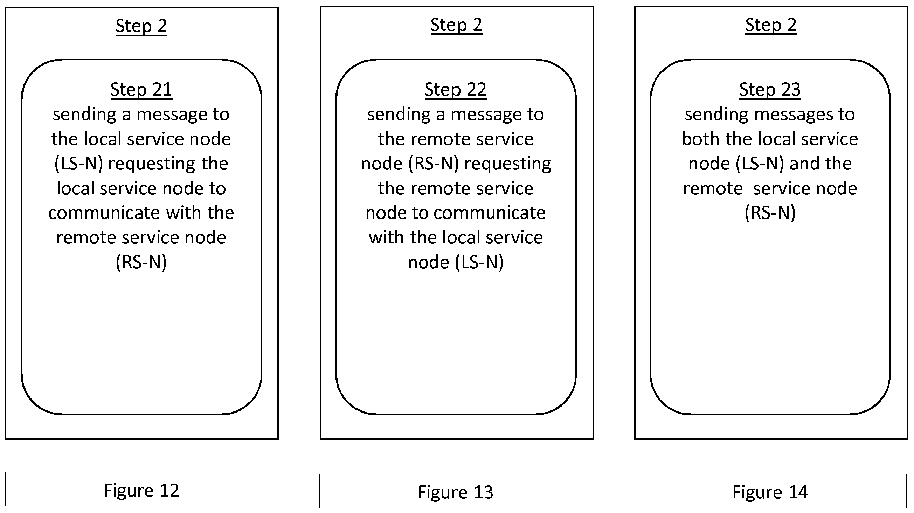

**Figures 12-14** shows alternative embodiments to Step 2 in Figure 6.

The central node C-N can initiate the first migration of in a variety of ways. Either it could be done by the central node C-N instructing/requesting the local service node LS-N to contact the remote service node RS-N in order to start the migration. It could also be done by the central node C-N instructing/requesting the remote service node RS-N to contact the local service node LS-N in order to start the migration. It could also be done by the central node C-N instructing/requesting both the local service node LS-N and the remote service node RS-N to start the migration.

**Figure 12** shows an alternative embodiments to Step 2 in Figure 6.

Step 21 - The central node C-N can be initiating the first migration by sending a message to the local service node LS-N requesting the local service node LS-N to communicate with the remote service node RS-N .

**Figure 13** shows an alternative embodiments to Step 2 in Figure 6.

Step 22 - The central node C-N can be initiating the first migration by sending a message to the remote service node RS-N requesting the remote service node RS-N to communicate with the local service node LS-N.

**Figure 14** shows an alternative embodiments to Step 2 in Figure 6.

Step 23 - The central node can be initiating the first migration by sending messages to both the local service node LS-N and the remote service node RS-N.

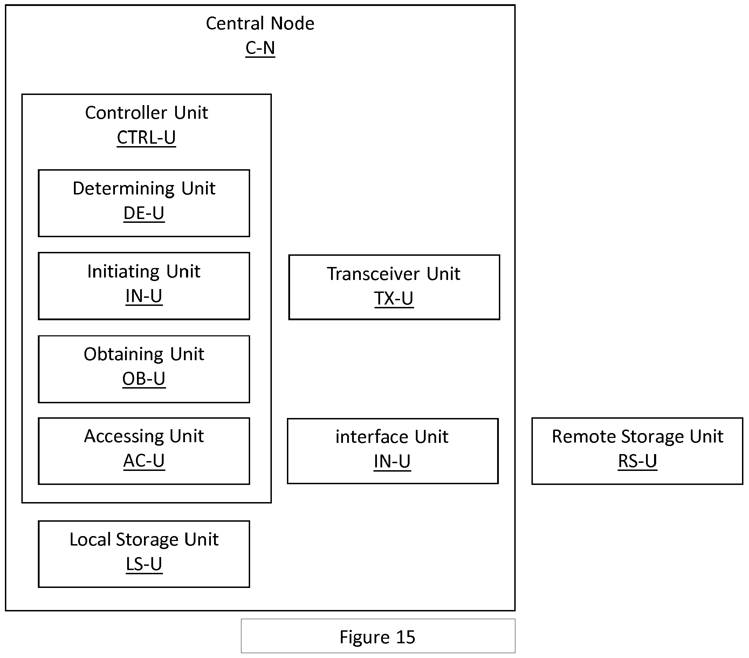

**Before describing** **Figure 15** a few things should be discussed some scenarios describing what will or could happen after the first migration is done.

When the first migration of data is done, the mobile communication device MCD will communicate with the local service node LS-N via the short range link SRL and the local service node LS-N will communicate via the unreliable link (UNL) with the remote service node (RS-N).

Once the vehicle VEHICLE, starts moving, the link quality of the unreliable link UNL will vary from good to non-existent. When/if the local service node LS-N will have good communication capabilities to the remote service node LS-N via the unreliable link UNL, data modules residing in the local service node LS-N and data modules residing in the remote service node RS-N may be checked for discrepancies and synchronization, e.g. by exchanging of delta-updates, may be performed. This would allow users, remote as well as local, to address overlapping changes, as soon as they are detected, rather than after a long time when multiple changes may have occurred in both the remote and the local storage.

In additional embodiments when the mobile communication device MCD is about to leave, or has left, the vehicle VEHICLE, the one or more data modules DA and/or one or more application modules AM can be migrated back, in a second migration, to the remote service nodes RS-N. This would allow the local service node LS-N to free up resources for other use, and it would also allow the mobile communication device to communicate with the remote service node RS-N via the unreliable link UNL. Here one has to take into account that the mobile communication device will lose, or has already lost, the connection via the short range link SRL.

The second migration could also result in that the data modules DA and/or application modules AM could be migrated to another local service node LS-N.

According to an example scenario the central node C-N can be determining, Step 3, that a second condition is met that indicates a request to migrate the one or more data modules DA and/or the one or more application modules AM from the local service node LS-N to another service node that might be local or remote. The central node will initiate, Step 4, the second migration of the one or more data modules DA and/or the one or more application modules (AM) based on whether the second condition is met.

The central node (C-N) can be determining that the a second condition is met in a variety of ways. The determination could be based on arrival information, ticket information or actual arrival time for the vehicle. It could also be based on geographical co-ordinates for the vehicle VEHICLE, mobile communication device MCD or the local service node LS-N: It could also be based on information that the mobile communication device MCD is about to leave the vehicle VEHICLE and/or that the mobile communication device has lost, or is about to lose, the connection to the local service device LS-D via the short range link SRL. The fact the user is about to leave a vehicle can be determined by different additional ways, examples could be that the user of the device is checking out or that he uses RF-ID to he is about to leave the vehicle VEHICLE.

The information that the second determination will be based on could reside in the central node C-N. It could also be obtained from a remote information node RI-N, or it could be received from the mobile communication device MCD or the local service node LS-N.

The person skilled in the art would realize that the determination also could be based on any combination of the methods discussed here.

The central node C-N can be determining that the second condition is met based on the central node obtaining arrival information A-IN.

The central node C-N can be determining that the second condition is met based on receiving information, that the mobile communication device MCD has left, or is about to leave, the proximity of the local service node LS-N, from any one of the local service node LS-N and the mobile communication device MCD.

Another related possibility could be that the central node C-N can be determining that the second condition is met based on receiving information, that the geographical coordinates of the mobile communication device MCD and/or the local service node LS-N is in the proximity of a certain geographical area indicating the destination of arrival. The central node C-N could receive this information from the mobile communication device MCD and/or the local service node LS-N.

The central node C-N can be obtaining the arrival information A-IN by accessing any one of ticket information T-IN and actual arrival time A-AT stored in the local storage unit LS-U in the central node CN or in the remote storage unit RS-U.

The central node C-N can be obtaining the arrival information A-IN by receiving any one of ticket information T-IN and actual arrival time A-AT from the remote information node RI-N.

The central node C-N can be obtaining the arrival information A-IN by receiving any one of ticket information T-IN and actual arrival time A-AT from the mobile communication device MCD.

The methods above could be implemented in the central node C-N which may be the same entity as the mobile communication device MCD.

The methods above could be implemented in the central node which may be an entity different from the mobile communication device (MCD).

**Figure 15** shows a block diagram for the central node C-N.

The central node C-N comprises the following blocks (or units).
- The controller Unit CTRL-U which is the unit controlling the behaviour of the central node C-N. The controller unit CTRL-U comprises several sub-units;
   ∘ The determining unit DE-U which is enabled to determine that a first condition is met, and optionally that a second condition is met.
   ∘ The initiating unit IN-U which is enabled to initiate a first migration of data, and optionally to initiate a second migration of data.
   ∘ The obtaining unit OB-U which is enabled to obtain departure information D-IN, and optionally arrival information A-IN.
   ∘ The accessing unit AC-U which is enabled to access any one of ticket information T-IN and actual departure time A-DT, and optionally any one of ticket information T-IN and actual arrival time A-AT.
- The local storage unit LS-U which is enabled to store any one of ticket information T-IN and actual departure time A-DT and optionally any one of ticket information T-IN and actual arrival time A-AT.
- The transceiver unit TX-U which is enabled to receive information from the remote service node RS-N, the mobile communication device MCD and optionally the remote information node RI-N and the remote storage unit RS-U.
- The interface unit IN-U which is enabled to interface the remote storage unit RS-U.

Outside the central node C-N resides the remote storage unit RS-U which is accessible from the central node C-N via the interface unit IN-U.

In order to perform the methods in the central node C-N described above, the central node may further comprise the following arrangements.

A central node C-N, for handling of migration of one or more data modules DA and/or one or more application modules AM from a remote service node RS-N to a local service node LS-N residing in a vehicle VEHICLE. The central node C-N comprising; a controller unit CTRL-U being configured to determine that a first condition is met that indicates a request to migrate the one or more data modules DA and/or the one or more application modules AM from the remote service node RS-N to the local service node LS-N. The controller unit CTRL-U is further configured to initiate a first migration of the one or more data module DA and/or the one or more application modules AM based on whether the first condition is met.

The central node C-N, where the controller unit CTRL-U, being configured to determine that a first condition is met, is configured to obtain departure information D-IN.

The central node C-N, where the controller unit CTRL-U, being configured to obtain departure information D-IN, is configured to access any one of ticket information T-IN and actual departure time A-DT. The controller unit CTRL-U being configured to access the information being stored in a local storage unit LS-U in the central node C-N, or the controller unit CTRL-U being configured to access the information via an interface unit IN-U being configured to access the information being stored in a remote storage unit RS-U.

The central node, where the controller unit CTRL-U, being configured to obtain departure information D-IN, is configured to receive any one of ticket information T-IN and actual departure time A-DT, via a transceiver unit TX-U being configured to receive the information from a remote information node RI-N.

The central node C-N, where the controller unit CTRL-U, being configured to obtain departure information D-IN, is configured to receive any one of ticket information T-IN and actual departure time A-DT, via a transceiver unit TX-U being configured to receive the information from the mobile communication device MCD.

The central node C-N, where the controller unit CTRL-U, being configured to determine that at a first condition is met, is configured to receive information that the mobile communication device MCD is in proximity of the local service node LS-N, via the transceiver unit TX-U being configured to receive the information from any one of the local service node LS-N and the mobile communication device MCD.

The central node C-N, where the controller unit CTRL-U, being configured to initiate a first migration, is configured to send a message, via the transceiver unit TX-U, and where the transceiver unit TX-U is configured to transmit the message, to the local service node LS-N, requesting the local service node to communicate with the remote service node RS-N.

The central node C-N, where the controller unit CTRL-U, being configured to initiate a first migration, is configured to send a message, via the transceiver unit TX-U, and where the transceiver unit TX-U is configured to transmit the message, to the remote service node RS-N, requesting the remote service node RS-N to communicate with the local service node LS-N.

The central node C-N, where the controller unit CTRL-U, being configured to initiate a first migration, is configured to send messages, via the transceiver unit TX-U, and where the transceiver unit TX-U is configured to transmit the messages, to the local service node LS-N and the remote service node RS-N.

The central node C-N, where the controller unit CTRL-U is being configured to determine that a second condition is met, that indicates a request to migrate the one or more data modules DA and/or the one or more application modules AM from the local service node LS-N to another service node that might be local or remote, and where the controller unit CTRL-U, is configured to initiate the second migration of the one or more data modules DA and/or the one or more application modules AM, based on whether the second condition is met.

The central node C-N may be the same entity as the mobile communication device MCD.

The central node C-N may be an entity different from the mobile communication device MCD.

In order to perform the methods in the central node C-N described in this disclosure, the method can be represented/implemented by a computer program comprising instructions which, when executed on at least one controller unit CTRL-U, cause the at least one controller unit CTRL-U to carry out the methods.

A carrier containing the computer program, wherein the carrier is one of an electronic signal, optical signal, radio signal, or computer readable storage medium.

The embodiments herein may be implemented through combination of analog and digital circuits, and one or more controller units, together with computer program code for performing the functions and actions of the embodiments herein. The program code mentioned above may also be provided as a computer program product, for instance in the form of a data carrier carrying computer program code for performing the embodiments herein when being loaded into the mobile communications device. One such carrier may be in the form of a CD ROM disc. It is however feasible with other data carriers such as a memory stick. The computer program code may furthermore be provided as pure program code on a server and downloaded to the mobile communications device at production, and/or during software updates.

Those skilled in the art will also appreciate that the blocks in the block diagram, may refer to a combination of analog and digital circuits, and/or one or more controller units, configured with software and/or firmware, e.g. stored in any of the storage units, that when executed by the one or more controller units perform as described above. One or more of these controller units, as well as any other combination of analog and digital circuits, may be included in a single application-specific integrated circuitry (ASIC), or several controller units and various digital hardware may be distributed among several separate components, whether individually packaged or assembled into a system-on-a-chip (SoC). The one or more controller units may be any one of, or a combination of a central processing unit (CPU), graphical processing unit (GPU), programmable logic array (PAL) or any other similar type of circuit or logical arrangement.

Those skilled in the art will also appreciate that Vehicle in its broadest sense could denote any means in or by which someone travels or something is carried or conveyed; a means of conveyance or transport.

When using the word "comprise" or "comprising" it shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

## Claims

1. A method of a central node (C-N), for migration of one or more data modules (DA) and/or one or more application modules (AM) from a remote service node (RS-N) to a local service node (LS-N) residing in a vehicle (VEHICLE), the method comprising:
*determining* (Step 1) that a first condition is met that indicates a request to migrate the one or more data modules (DA) and/or the one or more application modules (AM) from the remote service node (RS-N) to the local service node (LS-N);
*initiating* (Step 2) a first migration of the one or more data modules (DA) and/or the one or more application modules (AM) based on whether the first condition is met; wherein the determining that the first condition is met is based on receiving information that a mobile communication device (MCD), which communicates with the remote service node (RS-N), is in proximity of the local service node (LS-N) from any one of the local service node (LS-N) and the mobile communication device (MCD) and obtaining departure information (DIN) of the vehicle, wherein the local service node (LS-N) is a node that will provide services to the mobile communication device (MCD) while the mobile communication device (MCD) is travelling on the vehicle.

2. The method of claim 1 where the obtaining departure information (D-IN) comprises accessing any one of ticket information (T-IN) and actual departure time (A-DT) stored in a local storage unit (LS-U) in the central node (C-N) or in a remote storage unit (RS-U).

3. The method of claim 1 where the obtaining of departure information (D-IN) comprises receiving any one of ticket information (T-IN) and actual departure time (A-DT) from a remote information node (RI-N).

4. The method of claim 1 where the obtaining of departure information (D-IN) comprises receiving any one of ticket information (T-IN) and actual departure time (A-DT) from a mobile communication device (MCD).

5. The method of any of the preceding claims where the initiating of the firstmigration comprises sending a message to the local service node (LS-N) requesting the local service node (LS-N) to communicate with the remote service node (RS-N) .

6. The method of any of claims 1-4 where the initiating of the first migration comprises sending a message to the remote service node (RS-N) requesting the remote service node (RS-N) to communicate with the local service node (LS-N).

7. The method of any of claims 1-4 where the initiating of the first migration comprises sending messages to both the local service node (LS-N) and the remote service node (RS-N).

8. The method of any of the preceding claims comprising
*determining* (Step 3) that a second condition is met that indicates a request to migrate the one or more data modules (DA) and/or the one or more application modules (AM) from the local service node (LS-N) to another service node that might be local or remote;
*initiating* (Step 4) a second migration of the one or more data modules (DA) and/or the one or more application modules (AM) based on whether the second condition is met.

9. The method of any of claims 1-8 where the central node (C-N) and the mobile communication device (MCD) is the same entity.

10. The method of any of claims 1-8 where the central node (C-N) and the mobile communication device (MCD) are different entities.

11. A central node (C-N), for handling migration of one or more data modules (DA) and/or one or more application modules (AM) from a remote service node (RS-N) to a local service node (LS-N) residing in a vehicle (VEHICLE), the central node (C-N) being comprising:
*a controller unit* (CTRL-U) being configured to determine that a first condition is met that indicates a request to migrate the one or more data modules (DA) and/or the one or more application modules (AM) from the remote service node (RS-N) to the local service node (LS-N);
*the controller unit* (CTRL-U) being further configured to initiate a first migration of the one or more data modules (DA) and/or the one or more application modules (AM) based on whether the first condition is met, wherein the controller unit (CTRL-U) being configured to determine that a first condition is met, is configured to receive information that a mobile communication device (MCD), which communicates with the remote service node (RS-N), is in proximity of the local service node (LS-N) from any one of the local service node (LS-N) and the mobile communication device (MCD) and obtain departure information (D-IN) of the vehicle, wherein the local service node (LS-N) is a node that will provide services to the mobile communication device (MCD) while the mobile communication device (MCD) is travelling on the vehicle.

12. The central node (C-N) of claim 11 where the controller unit (CTRL-U), being configured to obtain departure information (D-IN), is configured to access anyone of ticket information (T-IM) and actual departure time (A-DT), the controller unit (CTRL-U) being configured to access the information being stored in a local storage unit (LS-U) in the central node (C-N) or the controller unit (CTRL-U) being configured to access the information via an interface unit (IN-U) being configured to access the information being stored in a remote storage unit (RS-U).

13. The central node (C-N) of claim 11 where the controller unit (CTRL-U), being configured to obtain departure information (D-IN), is configured to receive any one of ticket information (T-IN) and actual departure time (A-DT) via a transceiver unit (TX-U) being configured to receive the information from a remote information node (RI-N).

14. The central node (C-N) of claim 11 where the controller unit (CTRL-U), being configured to obtain departure information (D-IN), is configured to receive any one of ticket information (T-IN) and actual departure time (A-DT) via a transceiverunit (TX-U) being configured to receive the information from the mobile communication device (MCD).

15. The central node (C-N) of any of claims 11-14 where the controller unit (CTRL-U), being configured to initiate a first migration, is configured to send a message, via the transceiver unit (TX-U) being configured to transmit the message, to the local service node (LS-N) requesting the local service node to communicate with the remote service node (RS-N) .

16. The central node (C-N) of any of claims 11-14 where the controller unit (CTRL-U), being configured to initiate a first migration, is configured to send a message, via the transceiver unit (TX-U) being configured to transmit the message, to the remote service node (RS-N) requesting the remote service node (RS-N) to communicate with the local service node (LS-N).

17. The central node (C-N) of any of claims 11-14 where the controller unit (CTRL-U), being configured to initiate a first migration, is configured to send messages, via the transceiver unit (TX-U) being configured to transmit the messages, to the local service node (LS-N) and the remote service node (RS-N).

18. The central node (C-N) of any of claims 11-17 comprising
*the controller unit* (CTRL-U) being configured to determine that a second condition is met that indicates a request to migrate the one or more data modules (DA) and/or the one or more application modules (AM) from the local service node (LS-N) to another service node that might be local or remote;
*the controller unit* (CTRL-U) being configured to initiate a second migration of the one or more data modules (DA) and/or the one or more application modules (AM) based on whether the second condition is met.

19. The central node (C-N) of any of claims 11-18 where the central node (C-N) and the mobile communication device (MCD) is the same entity.

20. The central node (C-N) of any of claims 11-18 where the central node (C-N) and the mobile communication device (MCD) are different entities.

21. A computer program comprising instructions which, when executed on at least one controller unit (CTRL-U) of a central node (C-N), cause the at least one controller unit (CTRL-U) to carry out the methods according to any one of the claims 1-10.

22. A carrier containing the computer program of claim 21, wherein the carrier is one of an electronic signal, optical signal, radio signal, or computer readable storage medium.

## Patentansprüche

1. Verfahren für einen zentralen Knoten (C-N) zur Migration eines oder mehrerer Datenmodule (DA) und/oder eines oder mehrerer Anwendungsmodule (AM) von einem Remote-Service-Knoten (RS-N) zu einem lokalen Service-Knoten (LS-N), welcher sich in einem Fahrzeug (VEHICLE) befindet, wobei das Verfahren umfasst:
*Bestimmen* (Schritt 1), dass eine erste Bedingung erfüllt ist, welche eine Anfrage zur Migration des einen oder der mehreren Datenmodule (DA) und/oder des einen oder der mehreren Anwendungsmodule (AM) von dem Remote-Service-Knoten (RS-N) zu dem lokalen Service-Knoten (LS-N) anzeigt;
*Initiieren* (Schritt 2) einer ersten Migration des einen oder der mehreren Datenmodule (DA) und/oder des einen oder der mehreren Anwendungsmodule (AM) auf Basis davon, ob die erste Bedingung erfüllt ist; wobei Bestimmen, dass die erste Bedingung erfüllt ist, auf Empfangen von Informationen, dass ein mobiles Kommunikationsgerät (MCD), welches mit dem Remote-Service-Knoten (RS-N) kommuniziert, sich in der Nähe des lokalen Service-Knotens (LS-N) befindet, von einem von dem lokalen Service-Knoten (LS-N) und dem mobilen Kommunikationsgerät (MCD), und Erhalten von Abfahrtsinformationen (D-IN) des Fahrzeugs basiert, wobei der lokale Service-Knoten (LS-N) ein Knoten ist, welcher Dienste für das mobile Kommunikationsgerät (MCD) bereitstellt, während das mobile Kommunikationsgerät (MCD) in dem Fahrzeug befördert wird.

2. Verfahren nach Anspruch 1, wobei das Erhalten von Abfahrtsinformationen (D-IN) Zugreifen auf eines von Ticketinformationen (T-IN) und tatsächlicher Abfahrtszeit (A-DT) umfasst, welche in einer lokalen Speichereinheit (LS-U) in dem zentralen Knoten (C-N) oder in einer Remote-Speichereinheit (RS-U) gespeichert sind.

3. Verfahren nach Anspruch 1, wobei das Erhalten von Abfahrtsinformationen (D-IN) Empfangen eines von Ticketinformationen (T-IN) und tatsächlicher Abfahrtszeit (A-DT) von einem Remote-Informationsknoten (RI-N) umfasst.

4. Verfahren nach Anspruch 1, wobei das Erhalten von Abfahrtsinformationen (D-IN) Empfangen eines von Ticketinformationen (T-IN) und tatsächlicher Abfahrtszeit (A-DT) von einem mobilen Kommunikationsgerät (MCD) umfasst.

5. Verfahren nach einem der vorstehenden Ansprüche, wobei das Initiieren der ersten Migration Senden einer Nachricht an den lokalen Service-Knoten (LS-N) umfasst, in welcher der lokale Service-Knoten (LS-N) aufgefordert wird, mit dem Remote-Service-Knoten (RS-N) zu kommunizieren.

6. Verfahren nach einem der Ansprüche 1-4, wobei das Initiieren der ersten Migration Senden einer Nachricht an den Remote-Service-Knoten (RS-N) umfasst, in welcher der Remote-Service-Knoten (RS-N) aufgefordert wird, mit dem lokalen Service-Knoten (LS-N) zu kommunizieren.

7. Verfahren nach einem der Ansprüche 1-4, wobei das Initiieren der ersten Migration Senden von Nachrichten an sowohl den lokalen Service-Knoten (LS-N) als auch den Remote-Service-Knoten (RS-N) umfasst.

8. Verfahren nach einem der vorstehenden Ansprüche, umfassend:
*Bestimmen* (Schritt 3), dass eine zweite Bedingung erfüllt ist, welche eine Anfrage zur Migration des einen oder der mehreren Datenmodule (DA) und/oder des einen oder der mehreren Anwendungsmodule (AM) von dem lokalen Service-Knoten (LS-N) zu einen anderen Service-Knoten, welcher lokal oder Remote sein kann, anzeigt;
*Initiieren* (Schritt 4) einer zweiten Migration des einen oder der mehreren Datenmodule (DA) und/oder des einen oder der mehreren Anwendungsmodule (AM) auf Basis davon, ob die zweite Bedingung erfüllt ist.

9. Verfahren nach einem der Ansprüche 1-8, wobei der zentrale Knoten (C-N) und das mobile Kommunikationsgerät (MCD) dasselbe Objekt ist.

10. Verfahren nach einem der Ansprüche 1-8, wobei der zentrale Knoten (C-N) und das mobile Kommunikationsgerät (MCD) unterschiedliche Objekte sind.

11. Zentraler Knoten (C-N) zur Handhabung von Migration eines oder mehrerer Datenmodule (DA) und/oder eines oder mehrerer Anwendungsmodule (AM) von einem Remote-Service-Knoten (RS-N) zu einem lokalen Service-Knoten (LS-N), welcher sich in einem Fahrzeug (VEHICLE) befindet, wobei der zentrale Knoten (C-N) umfasst:
*eine Steuereinheit* (CTRL-U), welche konfiguriert ist, um zu bestimmen, dass eine erste Bedingung erfüllt ist, welche eine Anfrage zur Migration des einen oder der mehreren Datenmodule (DA) und/oder des einen oder der mehreren Anwendungsmodule (AM) von dem Remote-Service-Knoten (RS-N) zu dem lokalen Service-Knoten (LS-N) anzeigt;
wobei *die Steuereinheit* (CTRL-U) weiter konfiguriert ist, um eine erste Migration des einen oder der mehreren Datenmodule (DA) und/oder des einen oder der mehreren Anwendungsmodule (AM) auf Basis davon zu initiieren, ob die erste Bedingung erfüllt ist, wobei die Steuereinheit (CTRL-U), welche konfiguriert ist, um zu bestimmen, dass die erste Bedingung erfüllt ist, konfiguriert ist, Informationen, dass ein mobiles Kommunikationsgerät (MCD), welches mit dem Remote-Service-Knoten (RS-N) kommuniziert, sich in der Nähe des lokalen Service-Knotens (LS-N) befindet, von einem von dem lokalen Service-Knoten (LS-N) und dem mobilen Kommunikationsgerät (MCD) zu empfangen, und Abfahrtsinformationen (D-IN) des Fahrzeugs zu erhalten, wobei der lokale Service-Knoten (LS-N) ein Knoten ist, welcher Dienste für das mobile Kommunikationsgerät (MCD) bereitstellt, während das mobile Kommunikationsgerät (MCD) in dem Fahrzeug befördert wird.

12. Zentraler Knoten (C-N) nach Anspruch 11, wobei die Steuereinheit (CTRL-U), welcher konfiguriert ist, um Abfahrtsinformationen (D-IN) zu erhalten, konfiguriert ist, um eines von Ticketinformationen (T-IM) und tatsächlicher Abfahrtszeit (A-DT) zu erhalten, wobei die Steuereinheit (CTRL-U) konfiguriert ist, auf die Informationen zuzugreifen, welche in einer lokalen Steuereinheit (LS-U) in dem zentralen Knoten (C-N) gespeichert sind, oder wobei die Steuereinheit (CTRL-U) konfiguriert ist, um auf die Informationen über einer Schnittstelleneinheit (IN-U) zuzugreifen, welche konfiguriert ist, um auf die Informationen zuzugreifen, welche in einer Remote-Speichereinheit (RS-U) gespeichert sind.

13. Zentraler Knoten (C-N) nach Anspruch 11, wobei die Steuereinheit (CTRL-U), welche konfiguriert ist, um Abfahrtsinformationen (D-IN) zu erhalten, konfiguriert ist, um eines von Ticketinformationen (T-IN) und tatsächlicher Abfahrtszeit (A-DT) über eine Sender/Empfänger-Einheit (TX-U) zu empfangen, welche konfiguriert ist, um die Informationen von einem Remote-Informationsknoten (RI-N) zu empfangen.

14. Zentraler Knoten (C-N) nach Anspruch 11, wobei die Steuereinheit (CTRL-U), welche konfiguriert ist, um Abfahrtsinformationen (D-IN) zu erhalten, konfiguriert ist, um eines von Ticketinformationen (T-IN) und tatsächlicher Abfahrtszeit (A-DT) über eine Sender/Empfänger-Einheit (TX-U) zu empfangen, welche konfiguriert ist, um die Informationen von dem mobilen Kommunikationsgerät (MCD) zu empfangen.

15. Zentraler Knoten (C-N) nach einem der Ansprüche 11-14, wobei die Steuereinheit (CTRL-U), welche konfiguriert ist, um eine erste Migration zu initiieren, konfiguriert ist, eine Nachricht über die Sender/Empfänger-Einheit (TX-U), welche konfiguriert ist, die Nachricht zu übermitteln, an den lokalen Service-Knoten (LS-N) zu senden, welche den lokalen Service-Knoten auffordert, mit dem Remote-Service-Knoten (RS-N) zu kommunizieren.

16. Zentraler Knoten (C-N) nach einem der Ansprüche 11-14, wobei die Steuereinheit (CTRL-U), welche konfiguriert ist, um eine erste Migration zu initiieren, konfiguriert ist, eine Nachricht über die Sender/Empfänger-Einheit (TX-U), welche konfiguriert ist, die Nachricht zu übermitteln, an den Remote-Service-Knoten (RS-N) zu senden, welche den Remote-Service-Knoten (RS-N) auffordert, mit dem lokalen Service-Knoten (LS-N) zu kommunizieren.

17. Zentraler Knoten (C-N) nach einem der Ansprüche 11-14, wobei die Steuereinheit (CTRL-U), welche konfiguriert ist, um eine erste Migration zu initiieren, konfiguriert ist, Nachrichten über die Sender/Empfänger-Einheit (TX-U), welche konfiguriert ist, die Nachrichten zu übermitteln, an den lokalen Service-Knoten (LS-N) und den Remote-Service-Knoten (RS-N) zu senden.

18. Zentraler Knoten (C-N) nach einem der Ansprüche 11-17, umfassend
*die Steuereinheit* (CTRL-U), welche konfiguriert ist, zu bestimmen, dass eine zweite Bedingung erfüllt ist, welche eine Anfrage zur Migration des einen oder der mehreren Datenmodule (DA) und/oder des einen oder der mehreren Anwendungsmodule (AM) von dem lokalen Service-Knoten (LS-N) zu einen anderen Service-Knoten, welcher lokal oder Remote sein kann, anzeigt;
*die Steuereinheit* (CTRL-U), welche konfiguriert ist, um eine zweite Migration des einen oder der mehreren Datenmodule (DA) und/oder des einen oder der mehreren Anwendungsmodule (AM) auf Basis davon zu initiieren, ob die zweite Bedingung erfüllt ist,

19. Zentraler Knoten(C-N) nach einem der Ansprüche 11-18, wobei der zentrale Knoten (C-N) und das mobile Kommunikationsgerät (MCD) dasselbe Objekt ist.

20. Zentraler Knoten(C-N) nach einem der Ansprüche 11-18, wobei der zentrale Knoten (C-N) und das mobile Kommunikationsgerät (MCD) unterschiedliche Objekte sind.

21. Computerprogramm, umfassend Anweisungen, welche, wenn in zumindest einer Steuereinheit (CTRL-U) eines zentralen Knotens (C-N) ausgeführt, die zumindest eine Steuereinheit (CTRL-U) veranlassen, die Verfahren nach einem der Ansprüche 1-10 auszuführen.

22. Träger, welcher das Computerprogramm nach Anspruch 21 beinhaltet, wobei der Träger eines von einem elektronischen Signal, optischen Signal, Funksignal oder rechnerlesbarem Speichermedium ist.

## Revendications

1. Procédé d'un nœud central (C-N), pour une migration d'un ou plusieurs modules de données (DA) et/ou d'un ou plusieurs modules d'application (AM) d'un nœud de service distant (RS-N) à un nœud de service local (LS-N) résidant dans un véhicule (VEHICLE), le procédé comprenant :
la *détermination* (étape 1) qu'une première condition est satisfaite qui indique une requête pour migrer les un ou plusieurs modules de données (DA) et/ou les un ou plusieurs modules d'application (AM) du nœud de service distant (RS-N) au nœud de service local (LS-N) ;
le *lancement* (étape 2) d'une première migration des un ou plusieurs modules de données (DA) et/ou des un ou plusieurs modules d'application (AM) sur la base du fait que la première condition est satisfaite ; dans lequel la détermination que la première condition est satisfaite est basée sur la réception d'informations qu'un dispositif de communication mobile (MCD) qui communique avec le nœud de service distant (RS-N) est à proximité du nœud de service local (LS-N) à partir d'un quelconque parmi le nœud de service local (LS-N) et le dispositif de communication mobile (MCD) et l'obtention d'informations de départ (D-IN) du véhicule, dans lequel le nœud de service local (LS-N) est un nœud qui fournira des services au dispositif de communication mobile (MCD) alors que le dispositif de communication mobile (MCD) voyage sur le véhicule.

2. Procédé selon la revendication 1, dans lequel l'obtention d'informations de départ (D-IN) comprend l'accès à un quelconque parmi des informations de ticket (T-IN) et un temps de départ actuel (A-DT) stockés dans une unité de stockage locale (LS-U) dans le nœud central (C-N) ou dans une unité de stockage distante (RS-U).

3. Procédé selon la revendication 1, dans lequel l'obtention d'informations de départ (D-IN) comprend la réception d'un quelconque parmi des informations de ticket (T-IN) et un temps de départ actuel (A-DT) à partir d'un nœud d'informations distant (RI-N).

4. Procédé selon la revendication 1, dans lequel l'obtention d'informations de départ (D-IN) comprend la réception d'un quelconque parmi des informations de ticket (T-IN) et un temps de départ actuel (A-DT) à partir d'un dispositif de communication mobile (MCD).

5. Procédé selon l'une quelconque des revendications précédentes, dans lequel le lancement de la première migration comprend l'envoi d'un message au nœud de service local (LS-N) demandant au nœud de service local (LS-N) de communiquer avec le nœud de service distant (RS-N).

6. Procédé selon l'une quelconque des revendications 1-4, dans lequel le lancement de la première migration comprend l'envoi d'un message au nœud de service distant (RS-N) demandant au nœud de service distant (RS-N) de communiquer avec le nœud de service local (LS-N).

7. Procédé selon l'une quelconque des revendications 1-4, dans lequel le lancement de la première migration comprend l'envoi de messages à la fois au nœud de service local (LS-N) et au nœud de service distant (RS-N).

8. Procédé selon l'une quelconque des revendications précédentes, comprenant
la *détermination* (étape 3) qu'une seconde condition est satisfaite qui indique une requête pour migrer les un ou plusieurs modules de données (DA) et/ou les un ou plusieurs modules d'application (AM) du nœud de service local (LS-N) à un autre nœud de service qui peut être local ou distant ;
le *lancement* (étape 4) d'une seconde migration des un ou plusieurs modules de données (DA) et/ou des un ou plusieurs modules d'application (AM) sur la base du fait que la seconde condition est satisfaite.

9. Procédé selon l'une quelconque des revendications 1-8, dans lequel le nœud central (C-N) et le dispositif de communication mobile (MCD) sont la même entité.

10. Procédé selon l'une quelconque des revendications 1-8, dans lequel le nœud central (C-N) et le dispositif de communication mobile (MCD) sont des entités différentes.

11. Nœud central (C-N), pour gérer une migration d'un ou plusieurs modules de données (DA) et/ou d'un ou plusieurs modules d'application (AM) d'un nœud de service distant (RS-N) à un nœud de service local (LS-N) résidant dans un véhicule (VEHICLE), le nœud central (C-N) comprenant :
une *unité de contrôleur* (CTRL-U) qui est configurée pour déterminer qu'une première condition est satisfaite qui indique une requête pour migrer les un ou plusieurs modules de données (DA) et/ou les un ou plusieurs modules d'application (AM) du nœud de service distant (RS-N) au nœud de service local (LS-N) ;
l*'unité de contrôleur* (CTRL-U) étant configurée en outre pour lancer une première migration des un ou plusieurs modules de données (DA) et/ou des un ou plusieurs modules d'application (AM) sur la base du fait que la première condition est satisfaite, dans lequel l'unité de contrôleur (CTRL-U), étant configurée pour déterminer qu'une première condition est satisfaite, est configurée pour recevoir des informations qu'un dispositif de communication mobile (MCD) qui communique avec le nœud de service distant (RS-N) est à proximité du nœud de service local (LS-N) à partir d'un quelconque parmi le nœud de service local (LS-N) et le dispositif de communication mobile (MCD) et obtenir des informations de départ (D-IN) du véhicule, dans lequel le nœud de service local (LS-N) est un nœud qui fournira des services au dispositif de communication mobile (MCD) alors que le dispositif de communication mobile (MCD) voyage sur le véhicule.

12. Nœud central (C-N) selon la revendication 11, dans lequel l'unité de contrôleur (CTRL-U), étant configurée pour obtenir des informations de départ (D-IN), est configurée pour accéder à un quelconque parmi des informations de ticket (T-IM) et un temps de départ actuel (A-DT), l'unité de contrôleur (CTRL-U) étant configurée pour accéder aux informations qui sont stockées dans une unité de stockage locale (LS-U) dans le nœud central (C-N) ou l'unité de contrôleur (CTRL-U) étant configurée pour accéder aux informations via une unité d'interface (IN-U) qui est configurée pour accéder aux informations qui sont stockées dans une unité de stockage distante (RS-U).

13. Nœud central (C-N) selon la revendication 11, dans lequel l'unité de contrôleur (CTRL-U), étant configurée pour obtenir des informations de départ (D-IN), est configurée pour recevoir l'un quelconque parmi des informations de ticket (T-IN) et un temps de départ actuel (A-DT) via une unité d'émetteur-récepteur (TX-U) qui est configurée pour recevoir les informations à partir d'un nœud d'informations distant (RI-N).

14. Nœud central (C-N) selon la revendication 11, dans lequel l'unité de contrôleur (CTRL-U), étant configurée pour obtenir des informations de départ (D-IN), est configurée pour recevoir l'un quelconque parmi des informations de ticket (T-IN) et un temps de départ actuel (A-DT) via une unité d'émetteur-récepteur (TX-U) qui est configurée pour recevoir les informations à partir du dispositif de communication mobile (MCD).

15. Nœud central (C-N) selon l'une quelconque des revendications 11-14, dans lequel l'unité de contrôleur (CTRL-U), étant configurée pour lancer une première migration, est configurée pour envoyer un message, via l'unité d'émetteur-récepteur (TX-U) qui est configurée pour transmettre le message, au nœud de service local (LS-N) demandant au nœud de service local de communiquer avec le nœud de service distant (RS-N).

16. Nœud central (C-N) selon l'une quelconque des revendications 11-14, dans lequel l'unité de contrôleur (CTRL-U), étant configurée pour lancer une première migration, est configurée pour envoyer un message, via l'unité d'émetteur-récepteur (TX-U) qui est configurée pour transmettre le message, au nœud de service distant (RS-N) demandant au nœud de service distant (RS-N) de communiquer avec le nœud de service local (LS-N).

17. Nœud central (C-N) selon l'une quelconque des revendications 11-14, dans lequel l'unité de contrôleur (CTRL-U), étant configurée pour lancer une première migration, est configurée pour envoyer des messages, via l'unité d'émetteur-récepteur (TX-U) qui est configurée pour transmettre le message, au nœud de service local (LS-N) et au nœud de service distant (RS-N).

18. Nœud central (C-N) selon l'une quelconque des revendications 11-17, comprenant
l*'unité de contrôleur* (CTRL-U) qui est configurée pour déterminer qu'une seconde condition est satisfaite qui indique une requête pour migrer les un ou plusieurs modules de données (DA) et/ou les un ou plusieurs modules d'application (AM) du nœud de service local (LS-N) à un autre nœud de service qui peut être local ou distant ;
*l'unité de contrôleur* (CTRL-U) étant configurée pour lancer une seconde migration des un ou plusieurs modules de données (DA) et/ou des un ou plusieurs modules d'application (AM) sur la base du fait que la seconde condition est satisfaite.

19. Nœud central (C-N) selon l'une quelconque des revendications 11-18, dans lequel le nœud central (C-N) et le dispositif de communication mobile (MCD) sont la même entité.

20. Nœud central (C-N) selon l'une quelconque des revendications 11-18, dans lequel le nœud central (C-N) et le dispositif de communication mobile (MCD) sont des entités différentes.

21. Programme informatique comprenant des instructions qui, quand elles sont exécutées sur au moins une unité de contrôleur (CTRL-U) d'un nœud central (C-N), amènent l'au moins une unité de contrôleur (CTRL-U) à réaliser les procédés selon l'une quelconque des revendications 1-10.

22. Support contenant le programme informatique selon la revendication 21, dans lequel le support est un parmi un signal électronique, un signal optique, un signal radio ou un support de stockage lisible par ordinateur.
